(19) Europäisches Patentamt
European Patent Office
Office européen des brevets

(11) Veröffentlichungsnummer: **0 017 621**
**B1**

(12) # EUROPÄISCHE PATENTSCHRIFT

(45) Veröffentlichungstag der Patentschrift: **15.12.82**

(21) Anmeldenummer: **80810105.9**

(22) Anmeldetag: **28.03.80**

(51) Int. Cl.³: **C 09 B 57/06**, C 07 D413/04, C 07 D417/04, D 06 P 3/72, D 06 P 5/00

(54) **Naphtholactamverbindungen, Verfahren zu deren Herstellung sowie ihre Verwendung als Farbstoffe.**

(30) Priorität: **04.04.79 CH 3133/79**

(43) Veröffentlichungstag der Anmeldung: **15.10.80 (Patentblatt 80/21)**

(45) Bekanntmachung des Hinweises auf die Patenterteilung: **15.12.82 Patentblatt 82/50**

(84) Benannte Vertragsstaaten: **CH DE FR GB IT**

(56) Entgegenhaltungen:
**FR A 644 947**
**FR A 2 274 725**
**FR A 2 353 613**
**GB A 1 199 094**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Patentabteilung Postfach**
**CH-4002 Basel (CH)**

(72) Erfinder: **Zink, Rudolf**
**Alemannenstrasse 2**
**CH-4106 Therwil (CH)**

**EP 0 017 621 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Naphtholactamverbindungen, Verfahren zu deren Herstellung sowie ihre Verwendung als Farbstoffe

Die Erfindung betrifft neue Naphtholactamverbindungen basischer oder kationischer Natur sowie deren Carbinolbasen, Verfahren zu deren Herstellung und deren Verwendung als Farbstoffe zum Färben und/oder Bedrucken von Textilmaterialien, vor allem von Polyacrylnitrilmaterialien oder sauer modifizierten Polyamid- und Polyestermaterialien.

Die neuen Naphtholactamverbindungen entsprechen der Formel I

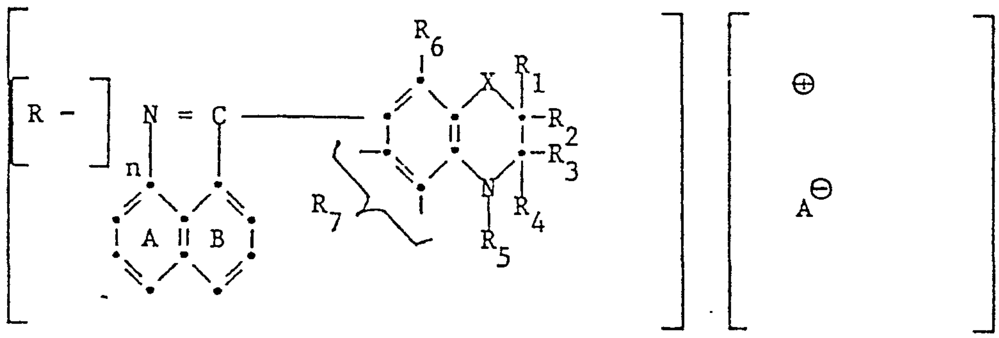

(I)

worin bedeuten :

R Wasserstoff oder einen gegebenenfalls substituierten Alkylrest ($C_1$-$C_4$), X das -O-Atom, $R_1$, $R_2$, $R_3$ und $R_4$ unabhängig voneinander Wasserstoff, eine gegebenenfalls substituierte Alkylgruppe mit 1 bis 6 Kohlenstoffatomen, oder ein oder zwei dieser Substituenten von $R_1$ bis $R_4$ eine gegebenenfalls substituierte Arylgruppe ; $R_5$ eine gegebenenfalls substituierte $C_1$-$C_4$-Alkylgruppe oder eine $C_2$-$C_4$ Alkenylgruppe ; $R_6$ und $R_7$ unabhängig voneinander Wasserstoff, Halogen oder eine Alkyl- oder Alkoxygruppe mit je 1 bis 4 Kohlenstoffatomen, A ein Anion und n 0 oder vorzugsweise 1, wobei die Ringe A und/oder B gegebenenfalls noch ein- oder mehrmals substituiert sein können.

Handelt es sich beim Rest R um einen Alkylrest ($C_1$-$C_4$) so kommt z.B. in Frage : ein unverzweigter oder verzweigter Alkylrest wie der Methyl-, Aethyl-, n- und iso-Propyl und n-, sec- und tert. Butylrest. Diese Alkylreste können substituiert sein, z.B. durch Hydroxy, Alkoxy ($C_1$-$C_4$), Phenoxy, Alkoxy ($C_1$-$C_4$)-carbonyl, Cyan, Halogen wie Fluor, Chlor oder Brom, Phenyl oder mit Nitro, Halogen, Alkyl oder Alkoxy substituiertes Phenyl. In bevorzugten Naphtholactamverbindungen bedeutet R einen unsubstituierten Alkylrest ($C_1$-$C_4$), wie z.B. $CH_3$ oder $C_2H_5$ oder einen substituierten, Alkylrest ($C_1$-$C_4$), wie z.B. Cyanäthyl oder Methoxyäthyl.

Die Ringe A und/oder B können ein- oder mehrmals substituiert sein, z.B. durch : Alkylgruppen ($C_1$-$C_4$ ; unverzweigt und verzweigt), Alkoxygruppen ($C_1$-$C_4$), Halogen wie Fluor, Chlor oder Brom ; Nitro, Alkyl ($C_1$-$C_4$)-mercapto, Alkyl ($C_1$-$C_4$)-sulfonyl, wie $CH_3So_2$ oder $C_2H_5SO_2$, Arylsulfonyl, Acylamino, wie Alkyl ($C_1$-$C_4$) carbonylamino z.B. Acetylamino, Cyan, $CONH_2$, N- mono- und N.N-disubstituiertes (z.B. durch Alkyl) Carbonsäureamid, $SO_2NH_2$, N- mono- und N.N-disubstituiertes (z.B. durch Alkyl) Sulfonsäureamid, wie N,N-Dibutylsulfonsäureamid sowie Carbonsäurealkylestergruppen, wie die Carbonsäuremethyl- und Carbonsäureäthylestergruppe.

In bevorzugten Naphtholactamverbindungen sind die Ringe A und/oder B entweder nicht substituiert oder ein- oder mehrmals substituiert durch Halogen, CN, COOY, $CONH_2$, CONHY, $CON(Y)_2$, $SO_2NH_2$, $SO_2NHY$, $SO_2N(Y)_2$ oder $SO_2Y$ worin Y Alkyl ($C_1$-$C_4$) bedeutet. Der bevorzugte Substituent ist jedoch Halogen, vor allem Brom, welches sich im Ring A befindet.

Bedeutet $R_1$, $R_2$, $R_3$ und/oder $R_4$ eine gegebenenfalls substituierte Alkylgruppe mit 1 bis 6 Kohlenstoffatomen, so handelt es sich z.B. um unsubstituierte, unverzweigte oder verzweigte Alkylgruppen, wie z.B. um die Methyl-, Aethyl-, n- und iso-Propyl-, n-, sec- und tert.-Butyl-, n- oder iso-Pentyl- oder n- oder iso-Kexylgruppe oder um derartige Alkylgruppen, welche substituiert sind, beispielsweise durch OH, CN und/oder Phenyl.

Bedeuten ein oder zwei dieser Substituenten $R_1$ bis $R_4$ eine gegebenenfalls substituierte Arylgruppe, so kommen z.B. in Frage : die unsubstituierte Phenylgruppe oder die unsubstituierte α- oder β-Naphthylgruppe oder die z.B. durch Halogen, wie Fluor, Chlor oder Brom, oder durch Alkyl ($C_1$-$C_4$) oder Alkoxy ($C_1$-$C_4$) substituierte Phenyl- bzw. Naphthylgruppe.

In bevorzugten Naphtholactamverbindungen der Formel I bedeutet $R_1$, $R_2$ und $R_3$ je Wasserstoff und $R_4$ entweder Wasserstoff oder die $CH_3$-, $C_2H_5$- oder $C_6H_5$-Gruppe.

$R_5$ in der Bedeutung einer gegebenenfalls substituierten Alkylgruppe mit 1 bis 4 Kohlenstoffatomen stell z.B. unsubstituierte unverzweigte oder verzweigte Alkylgruppen wie die Methyl-, Aethyl-, n- und iso-Propyl- und n- und iso-Butylgruppe als auch solche Alkylgruppen dar, welche substituiert sind z.B. durch OH, CN, Alkoxy ($C_1$-$C_4$) oder Phenyl ; $R_5$ in der Bedeutung einer Alkenylgruppe stellt z.B. die $-CH_2-CH=CH_2$ Gruppe dar.

In bevorzugten Naphtholactamverbindungen der Formel (I) bedeutet $R_5$ eine gegebenenfalls durch

OH, Alkoxy($C_1$-$C_4$), CN oder Phenyl substituierte Alkylgruppe mit 1 bis 4 Kohlenstoffatomen, und insbesondere $CH_3$, $C_2H_5$, $C_2H_4OH$, $C_2H_4OCH_3$, $C_2H_4OC_2H_5$ oder $CH_2C_6H_5$.

Bedeuten $R_6$ und/oder $R_7$ Halogen, so kommt z.B. in Frage : Fluor, Chlor oder Brom ; in der Bedeutung einer Alkyl- oder Alkoxygruppe mit je 1 bis 4 Kohlenstoffatomen stellen $R_6$ und/oder $R_7$ dar : unverzweigte oder verzweigte Alkyl- und Alkoxygruppen, wie die Methyl-, Aethyl-, n- und iso-Propyl-, n- und iso-Butyl- sowie die Methoxy-, Aethoxy-, iso-Propoxy- oder Butoxygruppe.

In bevorzugten Naphtholactamverbindungen bedeudet $R_6$ Wasserstoff und $R_7$ Wasserstoff oder eine Alkylgruppe mit 1bis 4 Kohlenstoffatomen.

« A » in der Bedeutung eines Anions stellt sowohl organische wie anorganische Ionen dar, z.B. Halogen, wie Chlorid-, Bromid- oder Jodid-, Rhodanid-, Sulfat-, Methylsulfat-, Aethylsulfat-, Aminosulfonat-, Perchlorat-, Carbonat-, Bicarbonat-, Phosphat-, Phosphormolybdat-, Phosphorwolframat-, Toluolsulfonat-, Phosphorwolframmolybdat-, Benzolsulfonat-, Naphthalinsulfonat-, 4-Chlorbenzolsulfonat-, Oxalat-, Maleinat-, Formiat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Liegen die Naphtholactamverbindungen der Formel I in Form der Carbinolbasen vor, so handelt es sich um Verbindungen der Formel

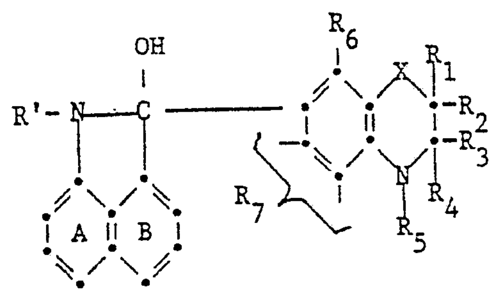

worin R′ einen gegebenenfalls substituierten Alkylrest ($C_1$-$C_4$) bedeutet und die übrigen Symbole die unter Formel I angegebene Bedeutung haben.

Besonders interessante Naphtholactamverbindungen infolge ihrer besonders brillanten Nuance, guten Farbstärke und Lichtechtheit sind basische (n = 0) und vor allem kationische Verbindungen der Formel I worin bedeuten :

n die Zahl 1, R die $CH_3$-, $C_2H_4CN$, $C_2H_4OCH_3$, $C_2H_4OC_2H_5$ oder $C_2H_5$-Gruppe, X das -O-Atom, $R_1$, $R_2$ und $R_3$ je Wasserstoff, $R_4$ Wasserstoff oder die $CH_3$-, $C_2H_5$- oder $C_6H_5$-Gruppe, $R_5$ die $CH_3$, $C_2H_5$, $CH_2$— 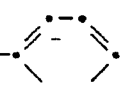 , $C_2H_4OCH_3$, $C_2H_4OC_2H_5$, $C_2H_4CN$ oder $C_2H_4OH$-Gruppe, $R_6$ Wasserstoff, $R_7$ Wasserstoff oder Alkyl ($C_1$-$C_4$), und die Ringe A und/oder B entweder nicht oder durch Brom substituiert sind.

Die Herstellung der erfindungsgemässen Naphtholactamverbindungen der Formel I erfolgt beispielsweise derart, dass man eine Naphtholactamverbindung der Formel II

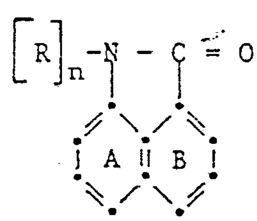

(II)

mit einer Benzomorpholinverbindung der Formel III

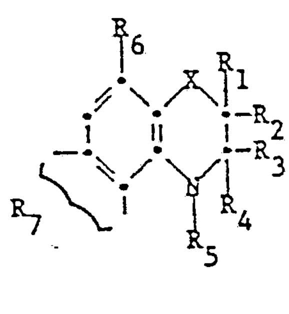

(III)

in Gegenwart eines Kondensationsmittels umsetzt, wobei, wenn in den Bedeutungen der Symbole der Formel I eine Hydroxygruppe vorkommt, diese in den Ausgangsverbindungen der Formeln II und III als Acyloxygruppe vorliegen muss und erst anschliessend an die Kondensation durch Hydrolyse in die Hydroxygruppe übergeführt wird.

Als Kondensationsmittel kommen z.B. die folgenden, wasserabspaltend wirkenden Reagenzien in Betracht : Phosphoräurehalogenide, wie Phosphoroxytrichlorid, Phosphoroxytribromid, Phosphorpentachlorid, sowie Sulfurylchlorid, Thionylchlorid, Phosgen, Zinkchlorid, Aluminiumchlorid etc. Man kann auch Gemische dieser Verbindungen verwenden, wie z.B. ein Gemisch aus Phosphoroxytrichlorid und Phosphorpentoxyd.

Die Kondensationsreaktion wird unter Erwärmen durchgeführt, im allgemeinen bei 50 bis 150 °C, insbesondere zwischen 75 und 85 °C. Lösungsmittel sind nicht erforderlich, doch kann das Reaktionsgemisch gewünschtenfalls mit einem inerten organischen Lösungsmittel, z.B. einem chlorierten Kohlenwasserstoff, wie Dichloräthan, Tetrachloräthan oder Chlorbenzol, verdünnt werden.

Enthalten die Ausgangsverbindungen der Formeln II und/oder III Hydroxylgruppen, so werden diese vorgängig der Kondensationsreaktion durch Acylierung, beispielsweise mittels Essigsäureanhydrid, bei einer Temperatur von etwa 70° bis 85 °C in Acyloxygruppen übergeführt, um nach der Kondensationsreaktion wieder nach bekannter Art und Weise verseift zu werden.

Die Naphtholactamverbindungen der Formel II sind bekannt (DE-A-27 24 701) und können nach bekannten Methoden hergestellt werden. Genannt sind z.B. :

Naphtholactam-1.8,
4-Brom-naphtholactam-1.8,
N-Methyl-naphtholactam-1.8,
N-Methyl-4-brom-naphtholactam-1.8,
N-Aethyl-4-brom-naphtholactam-1.8,
N-β-Cyanäthyl-naphtholactam-1.8,
N-β-Methoxyäthyl-naphtholactam-1.8,
N-β-Aethoxyäthyl-naphtholactam-1.8,
N-Aethyl-2.4-dibrom-naphtholactam-1.8,
N-Aethyl-5-äthoxycarbonyl-naphtholactam-1.8,
N-Methyl-5-cyan-naphtholactam-1.8,
N-Aethyl-4-methylsulfonyl-naphtholactam-1.8,
N-Methyl-4-dibutylaminosulfonyl-naphtholactam-1.8,
N-Aethyl-naphtholactam-1.8,
N-Methyl-5-methoxycarbonyl-naphtholactam-1.8,
N-Methyl-4-methylsulfonyl-naphtholactam-1.8, und
N-Aethyl-4-dibutylaminosulfonyl-naphtholactam-1.8.

Bevorzugte Stellen der Substituenten in den Ringen A und/oder B sind die 2-, 4- und 5-Stellung.

Bekannt (z.B. aus den Chem. Berichten *30*, Seite 1 634 ff oder *55*, Seite 3 821, oder aus dem Chem. Zentralblatt 1898/II, Seite 525 sowie US-A-2 448 869) sind ebenfalls die Benzomorpholinverbindungen III, die ebenfalls nach bekannter Art und Weise hergestellt werden können. Genannt sind aus der grossen Auswahl z.B. :

3-Methyl-N-(2'-hydroxyäthyl)-benzomorpholin,
3.6-Dimethyl-N-(2'-hydroxyäthyl)-benzomorpholin,
3-Methyl-6-Chlor-N-(2'-hydroxyäthyl)-benzomorpholin,
3-Phenyl-N-(2'-hydroxyäthyl)-benzomorpholin,
N-(2'-hydroxyäthyl)-benzomorpholin,
3-Methyl-N-(2'-hydroxypropyl)-benzomorpholin,
3-Phenyl-6-methyl-N-(2'-hydroxyäthyl)-benzomorpholin,
3.6-Dimethyl-N-(2'-hydroxybutyl)-benzomorpholin,
3-Methyl-N-(2-methoxyäthyl)-benzomorpholin,
3-Methyl-N-(2-äthoxyäthyl)-benzomorpholin,
N-Methoxyäthyl-benzomorpholin,
N-Aethyl-N-methyl-benzomorpholin,
N-Methyl-benzomorpholin,
3.6-Dimethyl-N-methyl-benzomorpholin,
3-Phenyl-N-methyl-benzomorpholin,
3-Phenyl-6-methyl-N-methyl-benzomorpholin,
3-Methyl-N-äthyl-benzomorpholin,
3.6-Dimethyl-N-äthyl-benzomorpholin,
3-Methyl-N-benzyl-benzomorpholin,
3-Methyl-N-β-cyanäthyl-benzomorpholin und
3-Methyl-N-methyl-benzomorpholin.

Die erfindungsgemässen Naphtholactamverbindungen der Formel I, sowohl die basischen und kationischen Verbindungen als auch die Carbinolbasen eignen sich als Farbstoffe zum Färben und unter Zusatz von Binde- und Lösungsmitteln zum Bedrucken der verschiedensten vollsynthetischen Fasern, wie z.B. von Polyvinylchlorid-, Polyamid- und Polyurethanfasern, Fasern aus Polyestern aromatischer Dicarbonsäuren wie z.B. von Polyäthylenglykolterephthalatfasern sowie vor allem sauer modifizierten Polyester- und Polyamidfasern, insbesondere aber von Polymerisaten aus Acrylnitril und Mischpolymerisaten aus Acrylnitril und asymmetrischem Dicyanäthylen oder Vinylacetat. Ebenfalls geeignet sind sie zum Spinnfärben sowie zum Färben der genannten Materialien im hydratisierten Zustand, d.h. an einer geeigneten Stelle zwischen Spinndüse und Trockner (Gelfärbung).

Naphtholactamverbindungen der Formel I worin n = 0 bedeutet sind als Farbstoffe für den Transferdruck geeignet.

Man färbt die gennanten Materialien vorzugsweise aus wässerigem, neutralem oder saurem Medium nach dem Ausziehverfahren, gegebenenfalls unter Druck oder nach dem Kontinueverfahren. Das Textilmaterial kann dabei in verschiedenartigster Form vorliegen, beispielsweise als Faser, Faden, Gewebe, Gewirke, Stückware und Fertigware wie Hemden und Pullover.

Die neuen Farbstoffe ergeben auf diesen Materialien brillante, farbstarke blaue Färbungen, welche sich vor allem auszeichnen durch eine hohe Lichtechtheit und gute Abendfarbe. Ausserdem besitzen sie eine gute Wasch-, Schweiss-, Sublimier-, Dekatur-, Reib-, Carbonisier-, Wasser-, Meerwasser-, Chlorwasser-, Ueberfärbe- und Lösungsmittelechtheit und haben eine gute Stabilität in einem grösseren pH-Bereich. Ein weiterer Vorteil ist die gute Kombinierbarkeit der Naphtholactamfarbstoffe der Formel I mit anderen kationischen Farbstoffen.

Die neuen Farbstoffe eignen sich auch zum Färben von Gemischen der obengenannten Materialien mit Wolle, wobei der Wollanteil kaum gefärbt wird. Ferner kann man sie zum Färben und Bedrucken von Papier und gebeizter Baumwolle sowie für die Herstellung von Tinten und Oelfarben verwenden.

In den folgenden Beispielen bedeuten die Teile (T) Gewichtsteile, die Prozente Gewichtsprozente und die Temperaturen sind in Celsiusgraden angegeben.

## Beispiel 1

8 T 3-Methyl-N-(2'-hydroxyäthyl)-benzomorpholin werden in 4,9 T Essigsäureanhydrid während 1 Std. bei 75-80° acyliert. Bei 40° vesetzt man mit 9,7 T N-Methyl-4-brom-naphtolactam-1,8, 0,6 T Zinkchlorid trocken und tropft innert 10 Minuten 12,5 T Phosphoroxytrichlorid zu. Man kondensiert während 3 Std. bei 80-85°, gibt 40 T Methyl-aethylketon und 47 T Wasser zu und verseift während 1 Std. bei 80°. Bei 20-25° neutralisiert man mit Natronlauge und fällt das Produkt der Formel

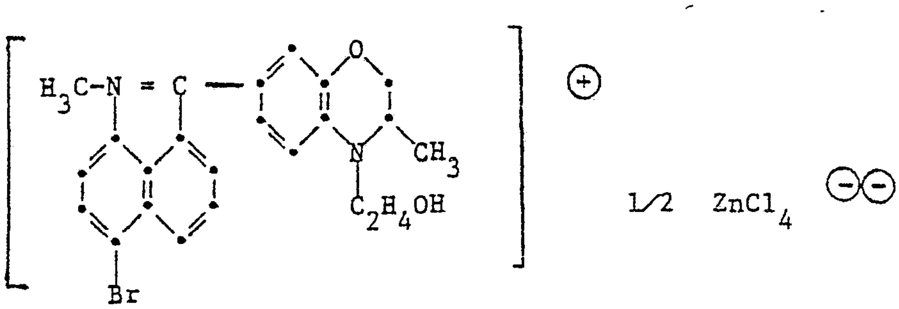

bei pH 5-6 durch Zugabe von Zinkchlorid und Kochsalz aus. Man erhält 7 T eines gut löslichen Farbsalzes, welches Polyacrylnitrilfasern in reinem Blau mit hervorragenden Echtheiten färbt.

Wertvolle Farbstoffe erhält man auch, wenn man analog obigem Beispiel arbeitet, jedoch äquivalente Mengen der in Tabelle I aufgeführten Naphtolactam- resp. Benzomorpholinverbindungen einsetzt.

(Siehe die Tabelle I, Seite 6)

Tabelle I

| Nr. | Naphtolactam Verbindung | Benzomorpholin-Verbindung | Nuance auf Polyacrylnitril |
|---|---|---|---|
| 2 | 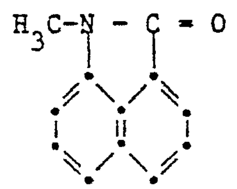 | 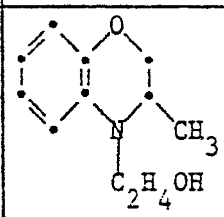 | blau |
| 3 | 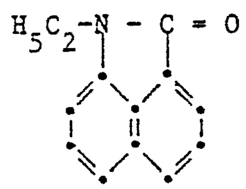 | 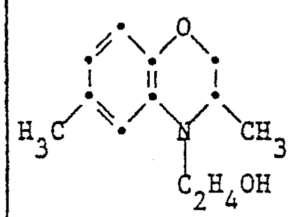 | blau |
| 4 | 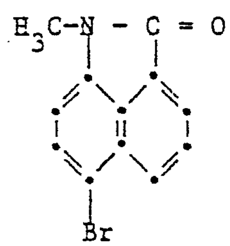 | 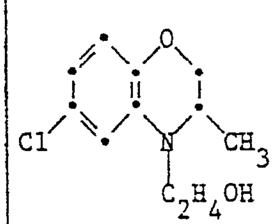 | blau |
| 5 | 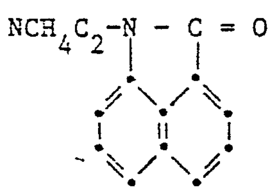 | 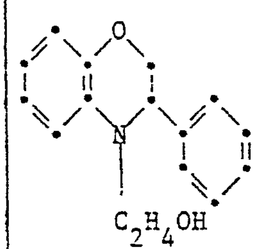 | blau |
| 6 | 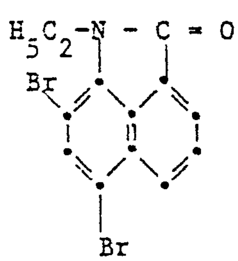 | 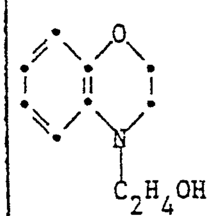 | blau |

Tabelle I (Fortsetzung)

| Nr. | Naphtolactam Verbindung | Benzomorpholin-Verbindung | Nuance auf Polyacryl-nitril |
|---|---|---|---|
| 7 | 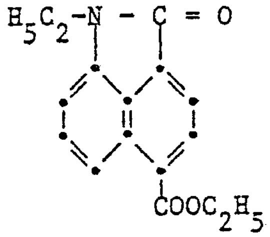 | 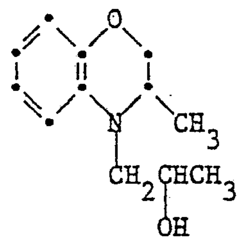 | blau |
| 8 | 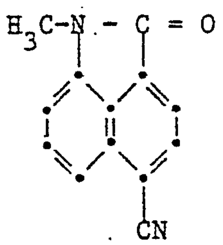 | 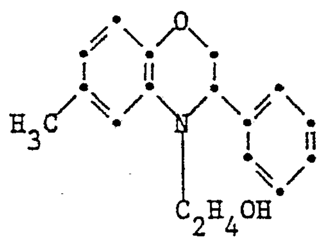 | blau |
| 9 | 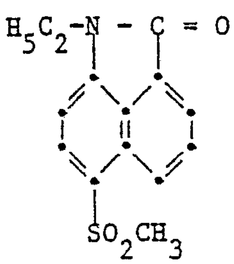 | 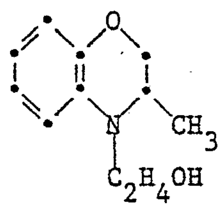 | blau |
| 10 | 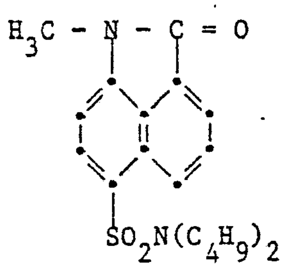 | 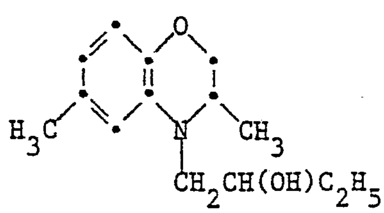 | blau |
| 11 | 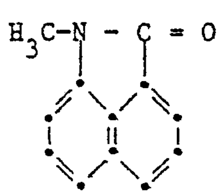 | 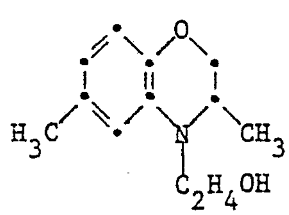 | blau |

Tabelle I (Fortsetzung)

| Nr. | Naphtolactam Verbindung | Benzomorpholin-Verbindung | Nuance auf Polyacrylnitril |
|---|---|---|---|
| 12 | 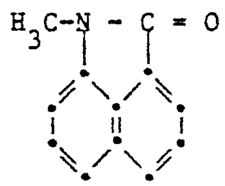 | 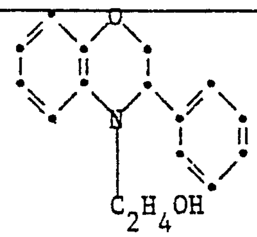 | blau |
| 13 | 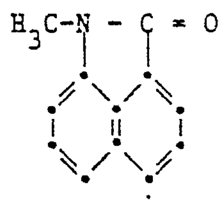 | 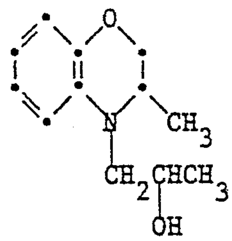 | blau |
| 14 | 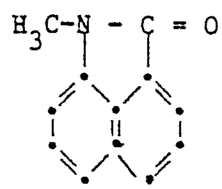 | 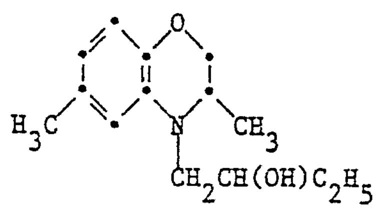 | blau |
| 15 | 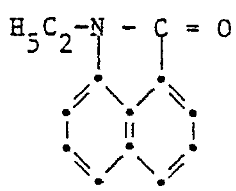 | 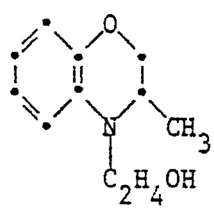 | blau |
| 16 | 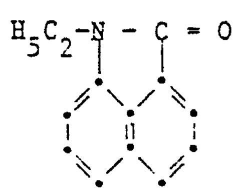 | 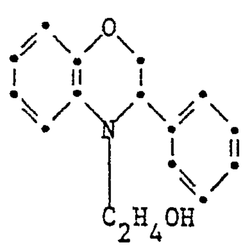 | blau |

Tabelle I (Fortsetzung)

| Nr. | Naphtolactam Verbindung | Benzomorpholin-Verbindung | Nuance auf Polyacrylnitril |
|---|---|---|---|
| 17 | 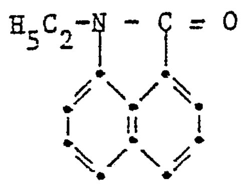 | 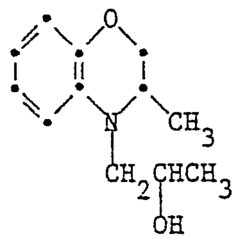 | blau |
| 18 | 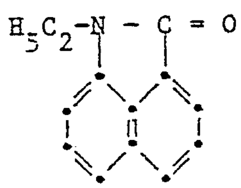 | 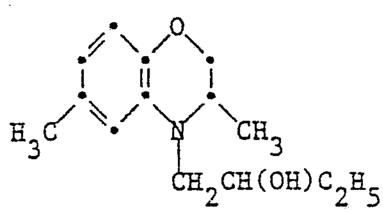 | blau |
| 19 | 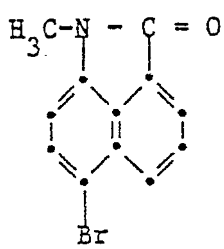 | 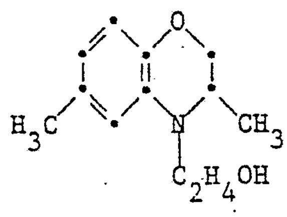 | blau |
| 20 | 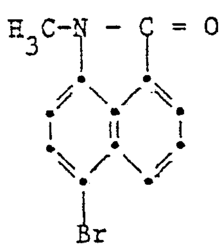 | 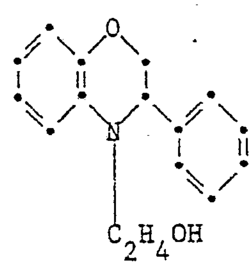 | blau |
| 21 | 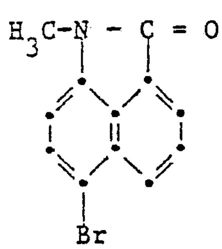 | 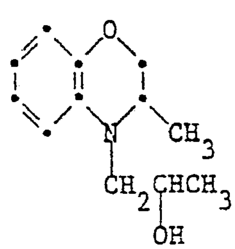 | blau |

Tabelle I (Fortsetzung)

| Nr. | Naphtholactum Verbindung | Benzomorpholin-Verbindung | Nuance auf Polyacryl-nitril |
|---|---|---|---|
| 22 | 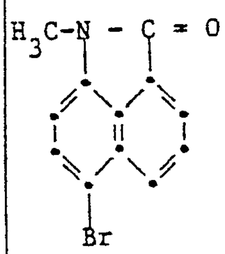 | 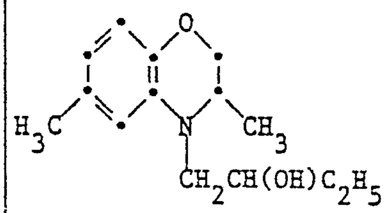 | blau |
| 23 | 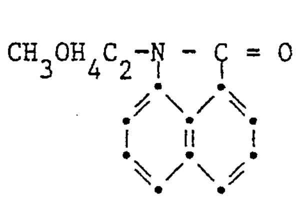 | 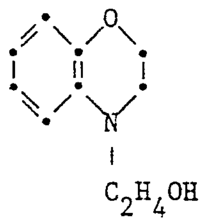 | blau |

Beispiel 24

Man löst 6,5 T 3-Methyl-N-methyl-benzomorpholin in 25 T Dichloräthan, gibt 7,5 T N-Aethyl-naphtholactam-1,8, 5 T Phosphoroxytrichlorid und 2 T Phosphorpentoxid zu und kondensiert während 4 Stunden bei 75-80°. Bei 50° versetzt man mit 500 T Wasser und trennt vom Dichloräthan. Durch Extraktion mit Essigester reinigt man die Wasserphase und fällt nach Klärfiltration das Farbsalz durch Zugabe von Zinkchlorid und Kochsalz aus. Nach dem Trocknen erhält man 12 T Farbsalz der Formel

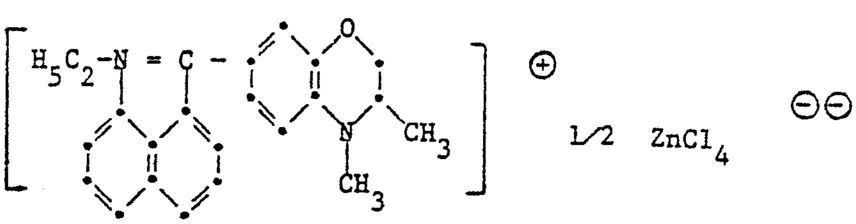

welches Polyacrylnitrilfasern in blauen Tönen mit sehr guten Echtheiten färbt.

Bei analoger Arbeitsweise und bei entsprechender Abänderung der Ausgangsmaterialien gemäss Tabelle II erhält man ebenso wertvolle Farbstoffe.

Tabelle II

| Nr. | Naphtholactam Verbindung | Benzomorpholin-Verbindung | Nuance auf Polyacrylnitril |
|---|---|---|---|
| 25 | 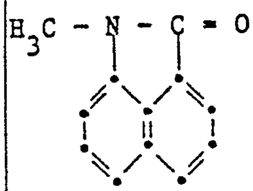 | 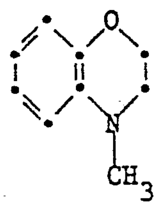 | blau |
| 26 | 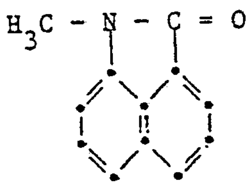 | 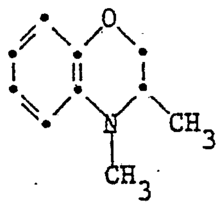 | blau |
| 27 | 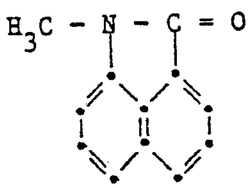 | 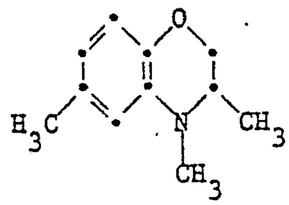 | blau |
| 28 | 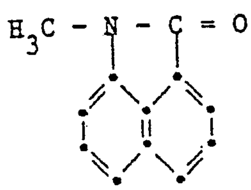 | 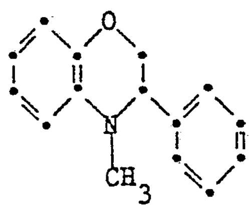 | blau |
| 29 | 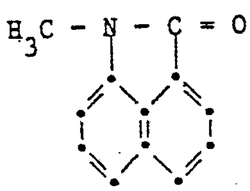 | 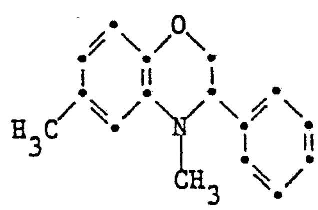 | blau |
| 30 | 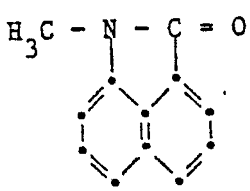 | 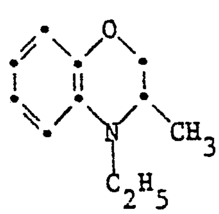 | blau |

Tabelle II (Fortsetzung)

| Nr. | Naphtholactam Verbindung | Benzomorpholin-Verbindung | Nuance auf Polyacryl-nitril |
|---|---|---|---|
| 31 | 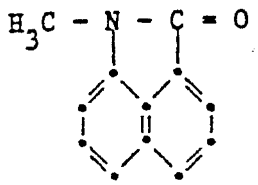 | 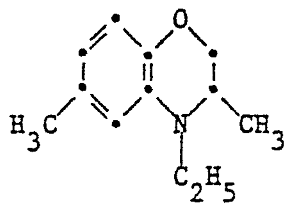 | blau |
| 32 | 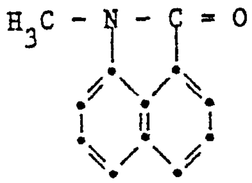 | 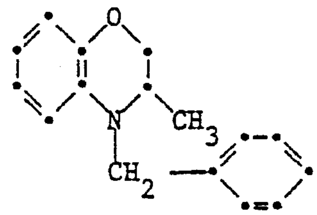 | blau |
| 33 | 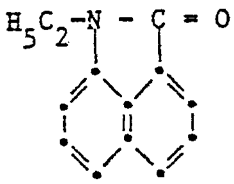 | 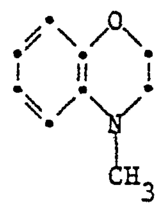 | blau |
| 34 | 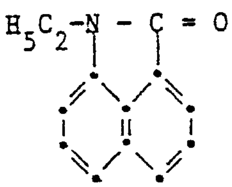 | 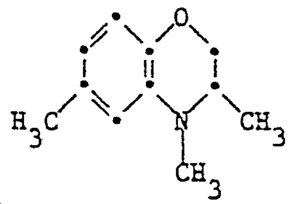 | blau |
| 35 | 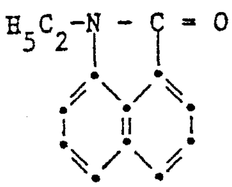 | 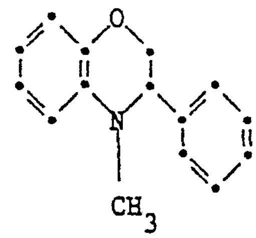 | blau |
| 36 | 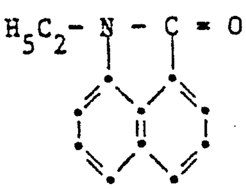 | 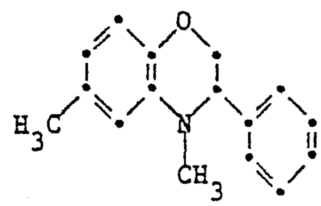 | blau |

Tabelle II (Fortsetzung)

| Nr. | Naphtholactam Verbindung | Benzomorpholin-Verbindung | Nuance auf Polyacrylnitril |
|---|---|---|---|
| 37 | 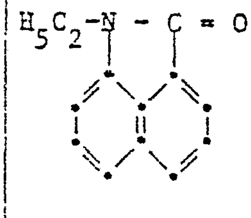 | 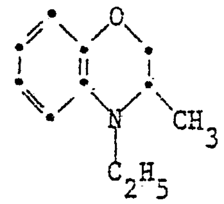 | blau |
| 38 | 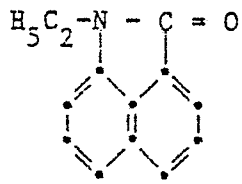 | 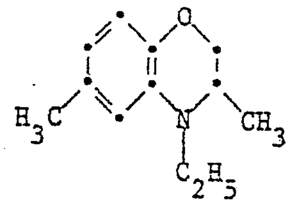 | blau |
| 39 | 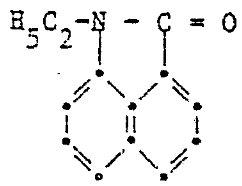 | 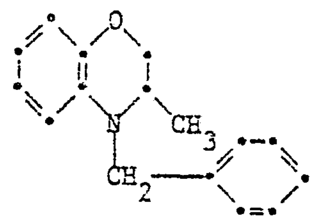 | blau |
| 40 | 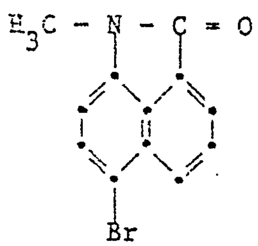 | 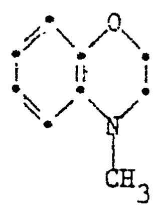 | blau |
| 41 | 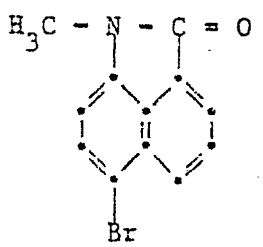 | 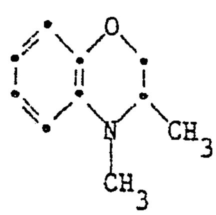 | blau |

Tabelle II (Fortsetzung)

| Nr. | Naphtholactam Verbindung | Benzomorpholin-Verbindung | Nuance auf Polyacryl-nitril |
|---|---|---|---|
| 42 | 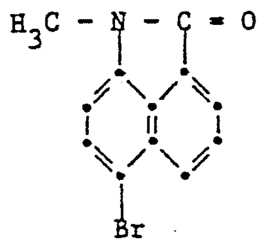 | 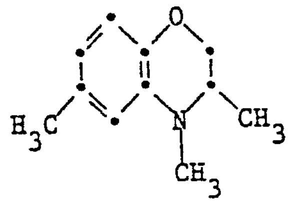 | blau |
| 43 | 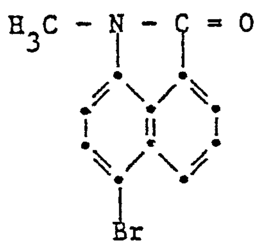 | 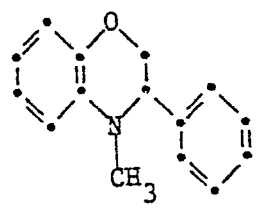 | blau |
| 44 | 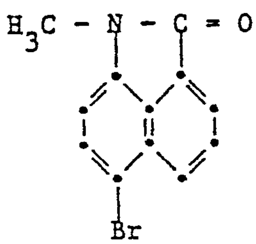 | 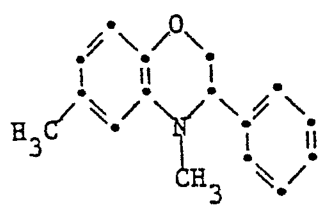 | blau |
| 45 | 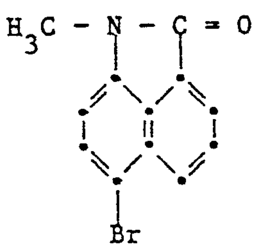 | 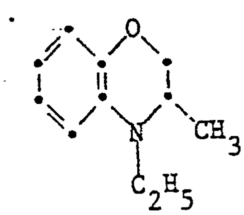 | blau |
| 46 | 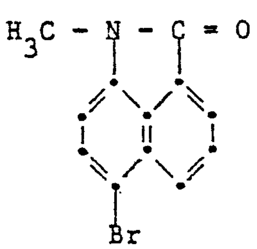 | 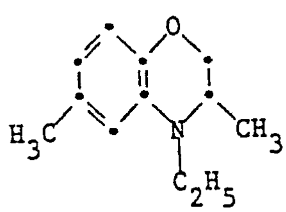 | blau |

Tabelle II (Fortsetzung)

| Nr. | Naphtholactam Verbindung | Benzomorpholin-Verbindung | Nuance auf Polyacrylnitril |
| --- | --- | --- | --- |
| 47 | 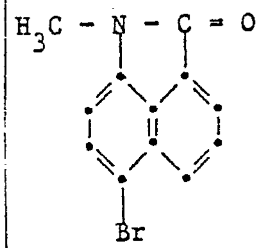 | 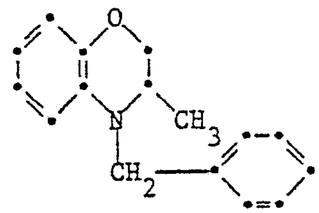 | blau |
| 48 | 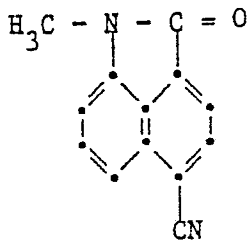 | 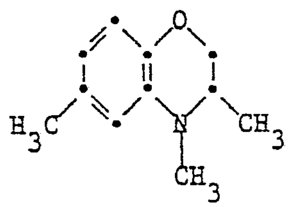 | blau |
| 49 | 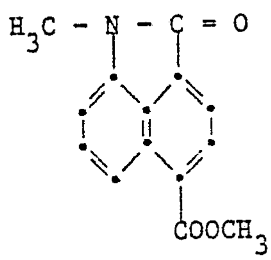 | 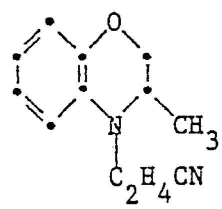 | blau |
| 50 | 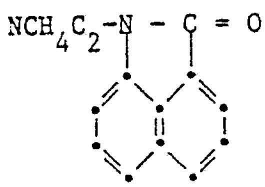 | 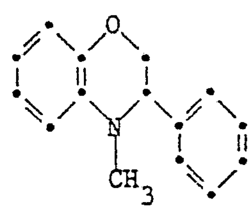 | blau |
| 51 | 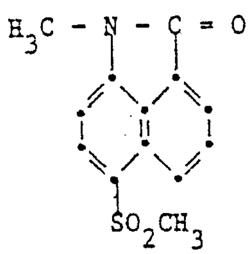 | 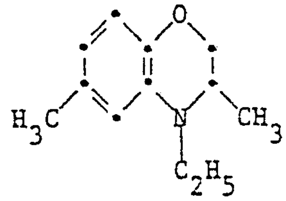 | blau |

Tabelle II (Fortsetzung)

| Nr. | Naphtholactam Verbindung | Benzomorpholin Verbindung | Nuance auf Polyacryl-nitril |
|---|---|---|---|
| 52 | 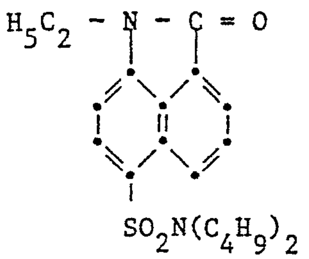 | 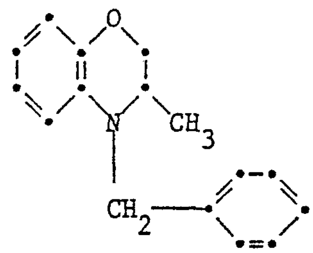 | blau |
| 53 | 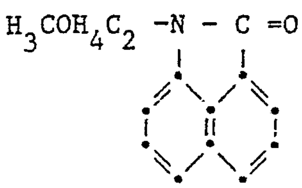 | 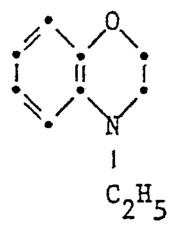 | blau |
| 54 | 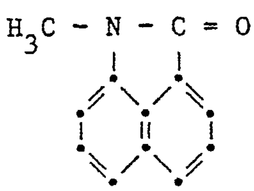 | 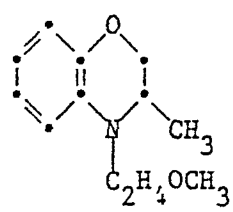 | blau |
| 55 | 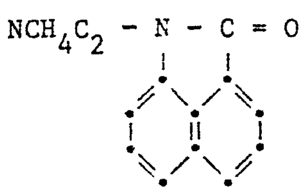 | 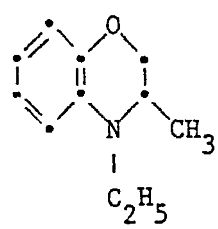 | blau |

Tabelle II (Fortsetzung)

| Nr. | Naphtholactam Verbindung | Benzomorpholin Verbindung | Nuance auf Polyacrylnitril |
|---|---|---|---|
| 56 | 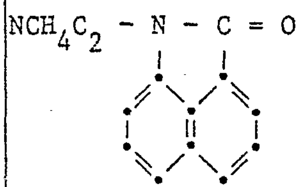 | 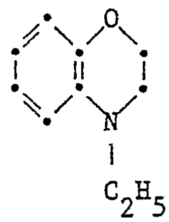 | blau |
| 57 | 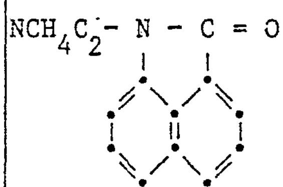 | 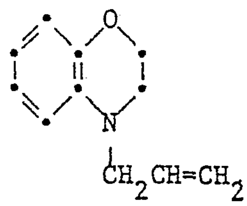 | blau |
| 58 | 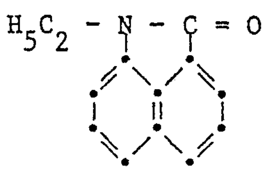 | 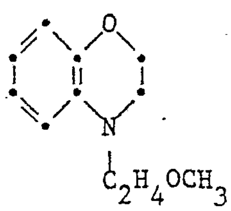 | blau |
| 59 | 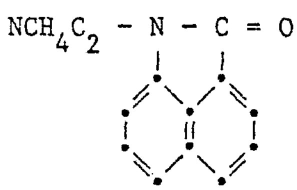 | 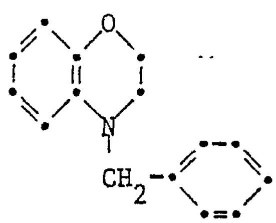 | blau |
| 60 | 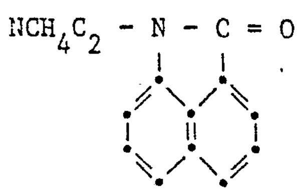 | 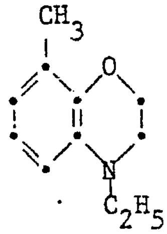 | blau |

Tabelle II (Fortsetzung)

| Nr. | Naphtholactam Verbindung | Benzomorpholin Verbindung | Nuance auf Polyacrylnitril |
|---|---|---|---|
| 61 | 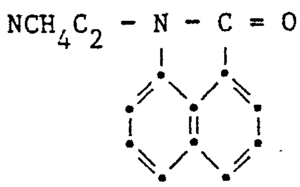 | 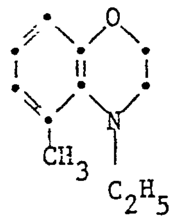 | blau |
| 62 | 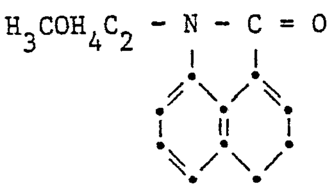 | 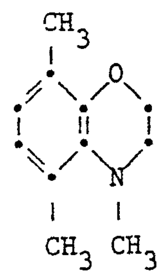 | blau |
| 63 | 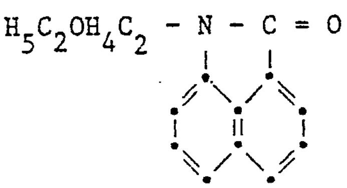 | 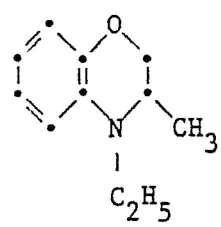 | blau |
| 64 | 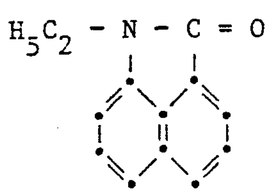 | 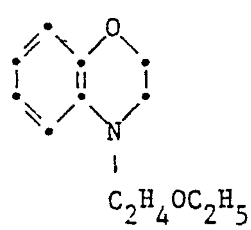 | blau |

Beispiel 65

9.7 T 3-Methyl-N-(2'-hydroxyäthyl)-benzomorpholin werden in 6 T Essigsäureanhydrid bei 75-80° in 1 Std. acyliert. Bei 40° versetzt man mit 8,9 T N-Aethyl-naphtolactam-1,8 und 0,7 T Zinkchlorid trocken, Innert 5 Min. tropft man noch 14 T Phosphoroxitrichlorid zu und erwärmt auf 75-80°, hält diese Temperatur während 2 1/2 Std. und tropft dann bei 60° 50 T Wasser zu. Man heizt auf 70-75° und hält diese Temperatur während 1/2 Std., wobei die Acetylgruppe verseift wird. Man gibt jetzt 150 T n-Butanol zu und stellt mit Natronlauge auf pH 12. Die braune Butanolphase wird abgetrennt, mit 200 T Wasser vermischt und mit Salzsäure conc. auf pH 2 gestellt. Am Rotationsverdampfer wird das Butanol abdestilliert, die zurückbleibende, wässrige Lösung klärfiltriert und bei 40° mit Natronlauge versetzt, bis die Carbinolbase der Formel

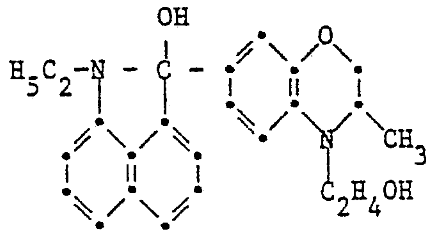

vollständig ausfällt ; man filtriert ab und trocknet. Diese ist z.B. in verdünnter Essigsäure gut löslich und färbt Polyacrylnitrilfasern in rotstichig blauen Tönen mit sehr guten Echtheiten.

Analog obiger Methode erhält man bei Verwendung der in Tabelle I und II aufgeführten Naphtholactam- bzw. Benzomorpholinverbindungen die entsprechenden Farbstoffe als Carbinolbasen mit ähnlichen Eigenschaften.

Beispiel 66

Man löst 4.1 T 3-Methyl-N-methyl-benzomorpholin in 12.5 T Dichloräthan, gibt nacheinander 4,2 T Naphtholactam-1.8, 3 T Phosphorpentoxyd und 10 T Phosphoroxytrichlorid zu und erwärmt auf 80°. Man kondensiert während 1 Stunde bei 81-83°, kühlt auf 25°, tropft langsam 100 T Wasser zu und stellt mit einer wässrigen Lösung von Natriumhydroxid auf pH ca. 9. Man extrahiert mit 200 T Essigester und destilliert das Lösungsmittel ab. So erhält man nach Protonierung mit Essigsäure 7.5 T des Farbstoffes der Formel

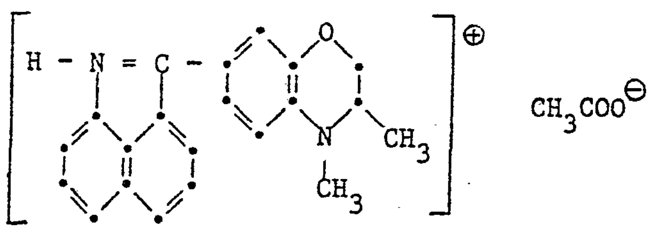

mit dem man konventionell auf Polyacrylnitrilfasern färben kann. Man erhält eine rotstichig blaue Färbung mit sehr guten Allgemeinechtheiten.

Verwendet man anstelle von 3-Methyl-N-methyl-benzomorpholin die in Tabelle II aufgeführten Benzomorpholinverbindungen und als Naphtholactamverbindung Naphtholactam-1.8 oder 4-Brom-naphtholactam-1.8, so erhält man bei im übrigen gleicher Arbeitsweise weitere erfindungsgemässe Farbstoffe, welche speziell für den Transferdruck auf Polyacrylnitril nach folgender Methode Verwendung finden :

3,75 g des gemäss Beispiel 66 erhaltenen Farbstoffes werden unter Zugabe von 2 g Natriummethylat in soviel einer Mischung aus 10 g Aethylenglykol, 86 g Aethylalkohol und 4 g Aethyl-cellulose gelöst, dass das Volumen der fertigen Tinte 100 ml beträgt. Verpresst man ein damit imprägniertes Papier 30-60 sec. bei etwa 200° mit einem Textilmaterial aus Polyacrylnitril, so erhält man einen sehr farbstarken, brillanten, blauen Druck mit sehr guter Licht-, Nass- und Reibechtheit.

Auf den Zusatz von Natriummethylat zur Drucktinte kann auch verzichtet werden.

Beispiel 67 und 68

Bei analoger Arbeitsweise wie im Beispiel 66 und entsprechender Abänderung der Ausgangsmaterialien gemäss Tabelle III erhält man ebenso wertvolle Farbstoffe für den Transferdruck :

(Siehe die Tabelle III, Seite 20)

Tabelle III

| Nr. | Naphtholactam Verbindung | Benzomorpholin Verbindung | Nuance auf Polyacrylnitril |
| --- | --- | --- | --- |
| 67 | 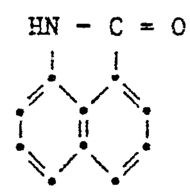 | 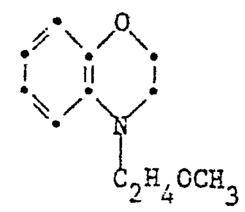 | blau |
| 68 | 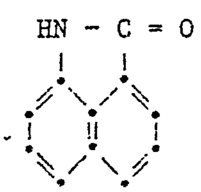 | 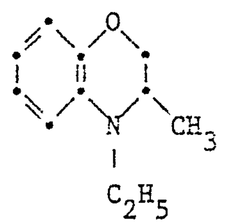 | blau |

Beispiel 69

5 g des gemäss Beispiel 1 hergestellten Farbstoffes werden mit 2 g 40 %iger Essigsäure angeteigt und durch Zugabe von 4 000 g heissem Wasser in Lösung gebracht. Man setzt noch 1 g Natriumacetat und 2 g eines mit Dimethylsulfat quaternierten Anlagerungsproduktes von 15 bis 20 Aequivalenten Aethylenoxid an N-Octadecyldiäthylentriamin zu und geht mit 100 g Polyacrylnitrilgewebe bei 60° ein. Innerhalb 30 Minuten erhitzt man das Bad auf 100° und färbt dann kochend während 90 Minuten. Hierauf lässt man die Flotte im Verlauf von 30 Minuten bis auf 60° abkühlen. Das so gefärbte Material wird dann herausgenommen und anschliessend mit lauwarmem und kaltem Wasser gespült.

Man erhält eine reine, blaue Polyacrylnitrilfärbung, die eine gute Lichtechtheit besitzt.

Beispiel 70

Ein Polyacrylnitril-Mischpolymerisat, bestehend aus 93 % Acrylnitril und 7 % Vinylacetat wird in Dimethylacetamid zu 15 % gelöst. Die Spinnflüssigkeit wird in ein Spinnbad extrudiert, welches aus 40 % Dimethylacetamid und 60 % Wasser besteht. Anschliessend wird das entstandene Spinnkabel nach bekannten Methoden verstreckt und durch Spülen mit heissem und kaltem Wasser von Dimethylacetamid befreit.

Dieses nasse Spinnkabel wird durch Tauchen in einem Bad von 42° gefärbt, welches 9 g/l des Farbstoffes gemäss Beispiel 1 enthält und dessen pH-Wert mit Essigsäure auf 4.5 gestellt wurde.

Die Kontaktzeit Faserkabel/Färbeflotte beträgt 2 Sekunden. Anschliessend wird die überschüssige Farbflotte abgequetscht und das Spinnkabel dem Trockner zugeführt. Es resultiert ein blau gefärbtes Faserkabel mit guten Echtheiten.

Beispiel 71

Man bereitet eine Druckpaste, bestehend aus :

25 T des gemäss Beispiel 1 erhaltenen Farbstoffes,
30 T Thiodiglykol,

20 T Essigsäure (80 %ig),
350 T kochendem Wasser,
500 T Johannisbrotkernmehlverdickung,
30 T Weinsäure 1 : 1,
15 T Di-(β-cyanäthyl)-formamid und
30 T eines Naphthalinsulfonsäureformaldehyd-Kondensationsproduktes.

Ein mit dieser Druckpaste bedrucktes Polyacrylnitril-Gewebe wird danach auf einem HT-Hängeschleifendämpfer 20 bis 30 Minuten bei 101° bis 103° fixiert und wie üblich fertiggestellt. Man erhält einen blauen Druck.

**Ansprüche**

1. Naphtholactamverbindungen der Formel I

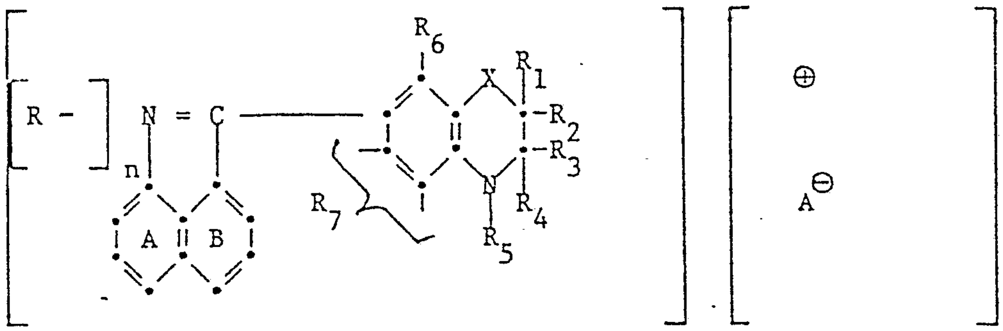

(I)

und deren Carbinolbasen, worin bedeuten :

R Wasserstoff oder einen gegebenenfalls substituierten Alkylrest ($C_1$-$C_4$) ; X das -O-Atom, $R_1$, $R_2$, $R_3$ und $R_4$ unabhängig voneinander Wasserstoff, eine gegebenenfalls substituierte Alkylgruppe mit 1 bis 6 Kohlenstoffatomen, oder ein oder zwei dieser Substituenten von $R_1$ bis $R_4$ eine gegebenenfalls substituierte Arylgruppe ; $R_5$ eine gegebenenfalls substituierte $C_1$-$C_4$-Alkylgruppe oder eine $C_2$-$C_4$ Alkenylgruppe ; $R_6$ und $R_7$ unabhängig voneinander Wasserstoff, Halogen oder eine Alkyl- oder Alkoxygruppe mit je 1 bis 4 Kohlenstoffatomen, A ein Anion und n 0 oder 1, wobei die Ringe A und/oder B gegebenenfalls noch ein- oder mehrmals substituiert sein können.

2. Naphtholactamverbindungen der Formel I gemäss Anspruch 1 dadurch gekennzeichnet, dass n die Zahl 1 bedeutet.

3. Naphtholactamverbindungen gemäss Anspruch 1 dadurch gekennzeichnet, dass R einen gegebenenfalls substituierten Alkylrest ($C_1$-$C_4$) bedeutet.

4. Naphtholactamverbindungen gemäss Anspruch 3, dadurch gekennzeichnet, dass R $CH_3$, $C_2H_5$, $CNC_2H_4$ oder $CH_3OC_2H_4$ bedeutet.

5. Naphtholactamverbindungen gemäss Anspruch 1, dadurch gekennzeichnet, dass $R_1$, $R_2$ und $R_3$ Wasserstoff bedeuten.

6. Naphtholactamverbindungen gemäss Anspruch 1, dadurch gekennzeichnet, dass $R_4$ Wasserstoff oder die $CH_3$-, $C_2H_5$- oder $C_6H_5$-Gruppe bedeutet.

7. Naphtolactamverbindungen gemäss Anspruch 1, dadurch gekennzeichnet, dass $R_5$ eine unsubstituierte Alkylgruppe mit 1 bis 4 Kohlenstoffatomen oder eine durch OH, CN, Alkoxy ($C_1$-$C_4$) oder Phenyl substituierte Alkylgruppe mit 1 bis 4 Kohlenstoffatomen bedeutet.

8. Naphtholactamverbindungen gemäss Anspruch 7, dadurch gekennzeichnet, dass $R_5$ die $CH_3$-, $C_2H_5$-, $C_2H_4OH$, $C_2H_4OCH_3$, $C_2H_4OC_2H_5$ oder die $CH_2$-$C_6H_5$-Gruppe bedeutet.

9. Naphtholactamverbindungen gemäss Anspruch 1, dadurch gekennzeichnet, dass $R_6$ Wasserstoff und $R_7$ Wasserstoff oder eine Alkylgruppe mit 1 bis 4 Kohlenstoffatomen bedeutet.

10. Naphtholactamverbindungen gemäss Anspruch 1, dadurch gekennzeichnet, dass die Ringe A und/oder B nicht substituiert sind oder ein- oder mehrmals durch Halogen, vor allem Brom substituiert sind.

11. Naphtholactamverbindungen gemäss Anspruch 1, dadurch gekennzeichnet, dass R einen unsubstituierten Alkylrest ($C_1$-$C_4$) bedeutet und $R_5$ Alkoxyäthyl, wobei die Alkoxygruppe 1-4 C-Atome aufweist.

12. Naphtholactamverbindungen gemäss Anspruch 1, dadurch gekennzeichnet, dass R Cyanäthyl oder Alkoxyäthyl, wobei die Alkoxy-gruppe 1-4 C-Atome aufweist, und $R_5$ Alkyl ($C_1$-$C_4$) bedeutet.

13. Naphtholactamverbindungen gemäss Ansprüchen 11 oder 12, dadurch gekennzeichnet, dass $R_1$, $R_2$ und $R_3$ Wasserstoff und $R_4$ Wasserstoff oder Methyl bedeuten.

14. Naphtholactamverbindungen gemäss Anspruch 1, dadurch gekennzeichnet, dass bedeuten : n die Zahl 1, R die $CH_3$, $C_2H_4CN$, $C_2H_4OCH_3$, $C_2H_4OC_2H_5$ oder $C_2H_5$-Gruppe, X das -O-Atom, $R_1$, $R_2$ und $R_3$ je Wasserstoff, $R_4$ Wasserstoff oder die $CH_3$-, $C_2H_5$- oder $C_6H_5$-Gruppe, $R_5$ die $CH_3$, $C_2H_5$,

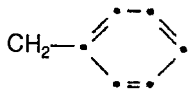, $C_2H_4OCH_3$, $C_2H_4OC_2H_5$, $C_2H_4CN$ oder $C_2H_4OH$-Gruppe, $R_6$ Wasserstoff, $R_7$ Wasserstoff oder Alkyl ($C_1$-$C_4$), und die Ringe A und/oder B entweder nicht oder durch Brom substituiert sind.

15. Naphtholactamverbindung der Formel

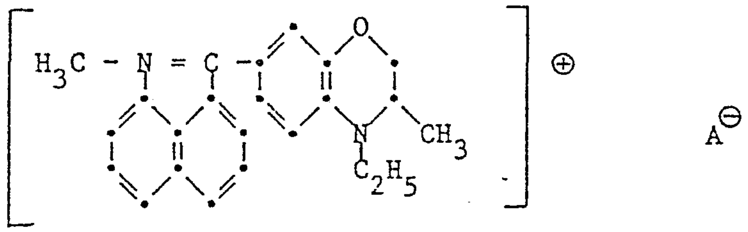

worin $A^{\ominus}$ ein Anion bedeutet.

16. Naphtholactamverbindung der Formel

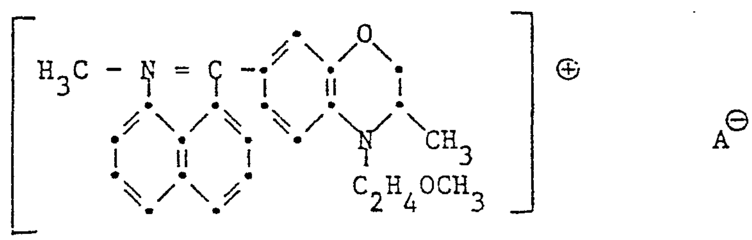

worin $A^{\ominus}$ ein Anion bedeutet.

17. Verfahren zur Herstellung der Naphtholactamverbindungen der Formel I gemäss Anspruch 1, dadurch gekennzeichnet, dass man eine Naphtholactamverbindung der Formel II

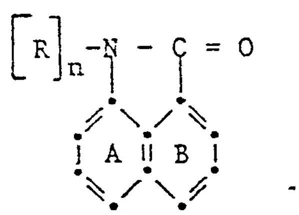

(II)

mit einer Benzomorpholinverbindung der Formel III

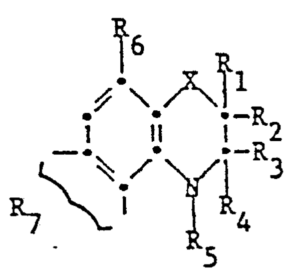

(III)

in Gegenwart eines Kondensationsmittels umsetzt, wobei, wenn in den Bedeutungen der Symbole der Formel I eine Hydroxygruppe vorkommt, diese in den Ausgangsverbindungen der Formeln II und III als Acyloxygruppe vorliegen muss und erst anschliessend an die Kondensation durch Hydrolyse in die Hydroxygruppe übergeführt wird.

18. Verwendung der Naphtholactamverbindungen der Formel I gemäss Anspruch 1 als Farbstoffe zum Färben und/oder Bedrucken von Polyacrylnitrilmaterialien oder sauer modifizierten Polyamid- oder Polyestermaterialien.

19. Verwendung der Naphtholactamverbindungen der Formel I gemäss Anspruch 1, worin $n = 0$ bedeutet als Farbstoffe für den Transferdruck.

20. Die mit den Naphtholactamverbindungen der Formel I gemäss Anspruch 1 behandelten Materialien.

## Claims

1. A naphtholactam compound of the formula I

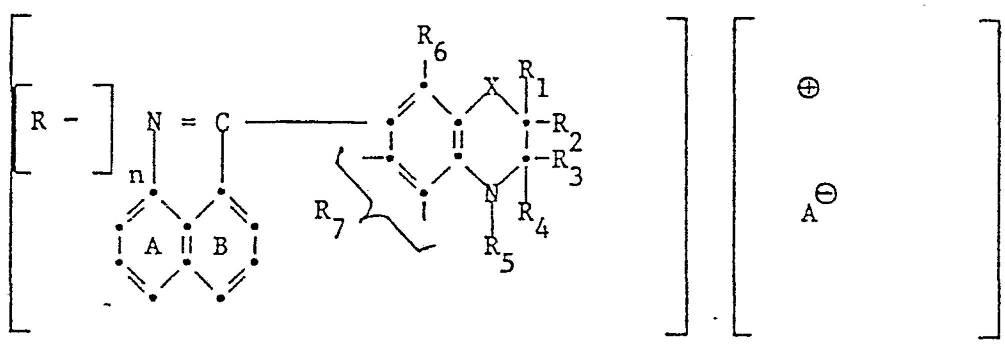

(I)

or the carbinol base thereof, in which

R is hydrogen or a substituted or unsubstituted alkyl radical ($C_1$-$C_4$), X is an -O-atom, $R_1$, $R_2$, $R_3$ and $R_4$ independently of one another are hydrogen or a substituted or unsubstituted alkyl group having 1 to 6 carbon atoms, or one or two of these substituents $R_1$ to $R_4$ is or are a substituted or unsubstituted aryl group ; $R_5$ is a substituted or unsubstituted $C_1$-$C_4$-alkyl group or a $C_2$-$C_4$ alkenyl group ; $R_6$ and $R_7$ independently of one another are hydrogen, halogen or an alkyl or alkoxy group, each having 1 to 4 carbon atoms, A is an anion and n is 0 or 1 and the rings A and/or B can be unsubstituted or mono- or poly-substituted.

2. A naphtholactam compound of the formula I according to claim 1, wherein n is the number 1.

3. A naphtholactam compound according to claim 1, wherein R is a substituted or unsubstituted alkyl radical ($C_1$-$C_4$).

4. A naphtholactam compound according to claim 3, wherein R is $CH_3$, $C_2H_5$, $CNC_2H_4$ or $CH_3OC_2H_4$.

5. A naphtholactam compound according to claim 1, wherein $R_1$, $R_2$ and $R_3$ are hydrogen.

6. A naphtholactam compound according to claim 1, wherein $R_4$ is hydrogen or the $CH_3$, $C_2H_5$ or $C_6H_5$ group.

7. A naphtholactam compound according to claim 1, wherein $R_5$ is an unsubstituted alkyl group having 1 to 4 carbon atoms or is an alkyl group having 1 to 4 carbon atoms which is substituted by OH, CN, alkoxy ($C_1$-$C_4$) or phenyl.

8. A naphtholactam compound according to claim 7, wherein $R_5$ is the $CH_3$, $C_2H_5$, $C_2H_4OH$, $C_2H_4OCH_3$, $C_2H_4OC_2H_5$ or $CH_2$-$C_6H_5$ group.

9. A naphtholactam compound according to claim 1, wherein $R_6$ is hydrogen and $R_7$ is hydrogen or an alkyl group having 1 to 4 carbon atoms.

10. A naphtholactam compound according to claim 1, wherein the rings A and/or B are not substituted or are mono- or poly-substituted by halogen, in particular bromine.

11. A naphtholactam compound according to claim 1, wherein R is an unsubstituted alkyl radical ($C_1$-$C_4$) and $R_5$ is alkoxyethyl, in which the alkoxy group has 1-4 C atoms.

12. A naphtholactam compound according to claim 1, wherein R is cyanoethyl or alkoxyethyl, in which the alkoxy group has 1-4 c atoms, and $R_5$ is alkyl ($C_1$-$C_4$).

13. A naphtholactam compound according to either claim 11 or 12, wherein $R_1$, $R_2$ and $R_3$ are hydrogen and $R_4$ is hydrogen or methyl.

14. A naphtholactam compound according to claim 1, wherein n is the number 1, R is the $CH_3$, $C_2H_4CN$, $C_2H_4OCH_3$, $C_2H_4OC_2H_5$ or $C_2H_5$ group, X is an -O-atom, $R_1$, $R_2$ and $R_3$ are each hydrogen, $R_4$ is hydrogen or a $CH_3$, $C_2H_5$ or $C_6H_5$ group, $R_5$ is a $CH_3$, $C_2H_5$,

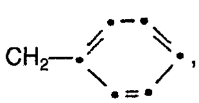, $C_2H_4OCH_3$, $C_2H_4OC_2H_5$, $C_2H_4CN$ or $C_2H_4OH$ group, $R_6$ is hydrogen, $R_7$ is hydrogen or

alkyl ($C_1$-$C_4$) and the rings A and/or B either are not substituted or are substituted by bromine.

15. A naphtholactam compound of the formula

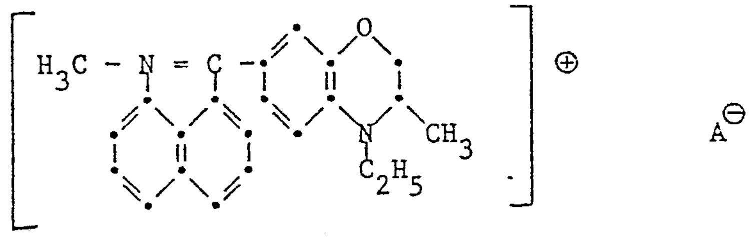

in which $A^{\ominus}$ is an anion.

16. A naphtholactam compound of the formula

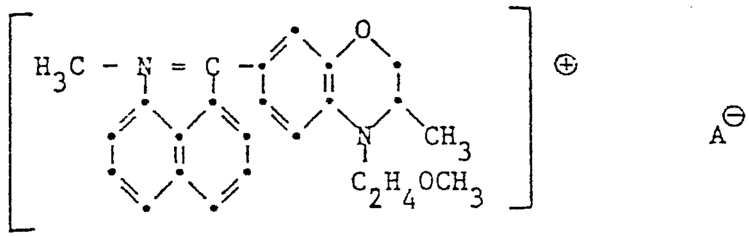

in which $A^{\ominus}$ is an anion.

17. A process for the preparation of a naphtholactam compound of the formula I according to claim 1, which comprises reacting a naphtholactam compound of the formula II

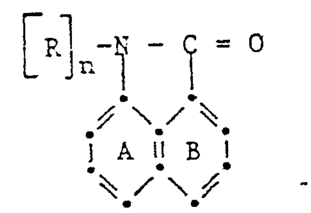

(II)

with a benzomorpholine compound of the formula III

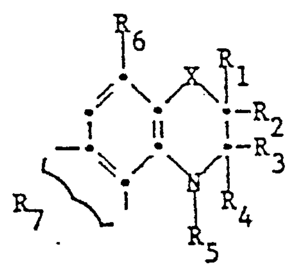

(III)

in the presence of a condensing agent, with the proviso that if any of the symbols in the formula I is a hydroxyl group this substituent must be in the form of an acyloxy group in the starting compounds of the formula II and III and be converted to the hydroxyl group by hydrolysis only after the condensation reaction.

18. The use of a naphtholactam compound of the formula I according to claim 1 as a dye for dyeing and/or printing polyacrylonitrile materials or acid-modified polyamide or polyester materials.

19. The use of a naphtholactam compound of the formula I according to claim 1, in which n is 0, as a dye for transfer printing.

20. The material treated with a naphtholactam compound of the formula I according to claim 1.

**Revendications**

1. Dérivés du naphtolactame de formule I

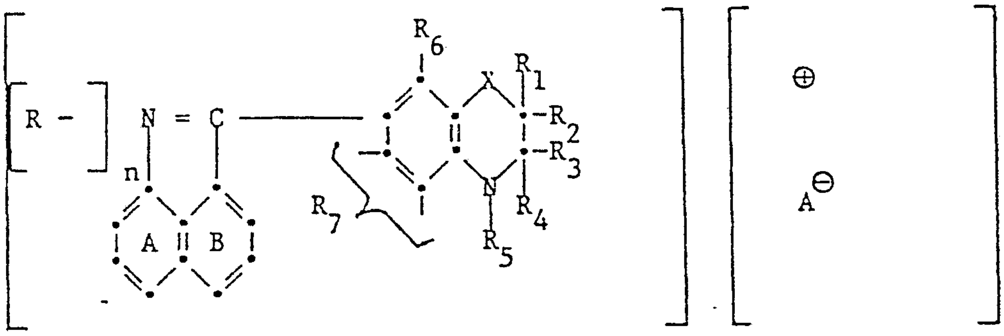

(I)

et leurs bases carbinol, où

R représente de l'hydrogène ou un reste alkyle ($C_1$-$C_4$) éventuellement substitué ; X représente l'atome -O- ; $R_1$, $R_2$, $R_3$ et $R_4$ représentent indépendamment les uns des autres de l'hydrogène, des groupes alkyle comportant 1 à 6 atomes de carbone, éventuellement substitués, ou bien un ou deux de ces substituants $R_1$ à $R_4$ représente(nt) un ou des groupe(s) aryle éventuellement substitué(s) ; $R_5$ représente un groupe alkyle $C_1$-$C_4$ éventuellement substitué ou bien un groupe alcényle $C_2$-$C_4$ ; $R_6$ et $R_7$ représentent indépendamment l'un de l'autre de l'hydrogène, de l'halogène ou des groupes alkyle ou alcoxy comportant chacun 1 à 4 atomes de carbone ; A représente un anion et n vaut 0 ou 1, les noyaux A et/ou B pouvant encore être substitués une ou plusieurs fois.

2. Dérivés du naphtolactame de formule I, selon la revendication 1, caractérisés par le fait que n représente le nombre 1.

3. Dérivés du naphtolactame selon la revendication 1, caractérisés par le fait que R représente un reste alkyle ($C_1$-$C_4$) éventuellement substitué.

4. Dérivés du naphtolactame selon la revendication 3, caractérisés par le fait que R représente $CH_3$, $C_2H_5$, $CNC_2H_4$ ou $CH_3OC_2H_4$.

5. Dérivés du naphtolactame selon la revendication 1, caractérisés par le fait que $R_1$, $R_2$ et $R_3$ représentent de l'hydrogène.

6. Dérivés du naphtolactame selon la revendication 1, caractérisés par le fait que $R_4$ représente de l'hydrogène ou bien le groupe $CH_3$, $C_2H_5$ ou $C_6H_5$.

7. Dérivés du naphtolactame selon la revendication 1, caractérisés par le fait que $R_5$ représente un groupe alkyle comportant 1 à 4 atomes de carbone, non substitué, ou bien un groupe alkyle comportant 1 à 4 atomes de carbone, substitué par OH, CN, un radical alcoxy ($C_1$-$C_4$) ou phényle.

8. Dérivés du naphtolactame selon la revendication 7, caractérisés par le fait que $R_5$ représente le groupe $CH_3$, $C_2H_5$, $C_2H_4OH$, $C_2H_4OCH_3$, $C_2H_4OC_2H_5$ ou bien $CH_2$-$C_6H_5$.

9. Dérivés du naphtolactame selon la revendication 1, caractérisés par le fait que $R_6$ représente de l'hydrogène, et $R_7$ représente de l'hydrogène ou bien un groupe alkyle comportant 1 à 4 atomes de carbone.

10. Dérivés du naphtolactame selon la revendication 1, caractérisés par le fait que les noyaux A et/ou B ne sont pas substitués ou bien sont substitués une ou plusieurs fois par un halogène, surtout du brome.

11. Dérivés du naphtolactame selon la revendication 1, caractérisés par le fait que R représente un reste alkyle ($C_1$-$C_4$) non substitué et $R_5$ représente un reste alcoxyéthyle où le groupe alcoxy présente 1 à 4 atomes de C.

12. Dérivés du naphtolactame selon la revendication 1, caractérisés par le fait que R représente un reste cyanéthyle ou alcoxyéthyle, où le groupe alcoxy présente 1 à 4 atomes de C, et $R_5$ représente un reste alkyle ($C_1$-$C_4$).

13. Dérivés du naphtolactame selon les revendications 11 ou 12, caractérisés par le fait que $R_1$, $R_2$ et $R_3$ représentent de l'hydrogène et $R_4$ représente de l'hydrogène ou le reste méthyle.

14. Dérivés du naphtolactame selon la revendication 1, caractérisés par le fait que : n représente le nombre 1 ; R représente $CH_3$, $C_2H_4CN$, $C_2H_4OCH_3$, $C_2H_4OC_2H_5$ ou $C_2H_5$ ; X représente l'atome -O- ; $R_1$, $R_2$ et $R_3$ représentent chacun de l'hydrogène ; $R_4$ représente de l'hydrogène ou le groupe $CH_3$, $C_2H_5$ ou $C_6H_5$ ; $R_5$ représente le groupe $CH_3$, $C_2H_5$,

$CH_2$— 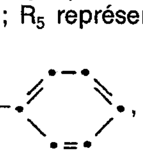, $C_2H_4OCH_3$, $C_2H_4OC_2H_5$, $C_2H_4CN$ ou $C_2H_4OH$ ; $R_6$ représente de l'hydrogène ; $R_7$ représente de l'hydrogène ou un reste alkyle ($C_1$-$C_4$), et les noyaux A et/ou B sont soit non-substitués, soit substitués par du brome.

15. Dérivés du naphtolactame de formule

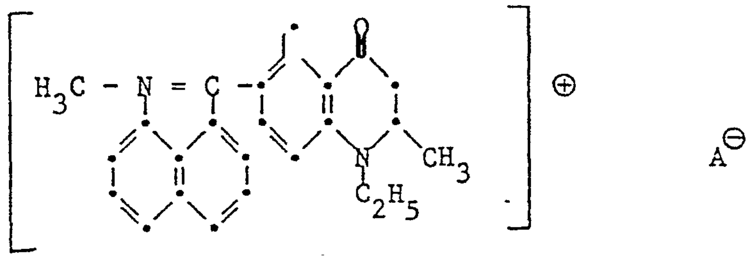

où $A^{\ominus}$ représente un anion.

16. Dérivés du naphtolactame de formule

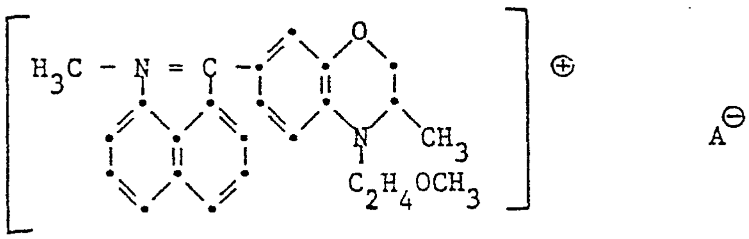

où $A^{\ominus}$ représente un anion.

17. Procédé pour préparer des dérivés du naphtolactame de formule I selon la revendication 1, caractérisé par le fait qu'on fait réagir un dérivé du naphtolactame de formule II

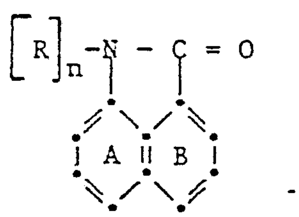

(II)

avec un dérivé de la benzomorpholine de formule III

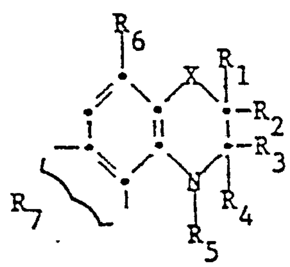

(III)

en présence d'un agent de condensation, étant donné que dans la signification des symboles de la formule I, il existe un groupe hydroxyle, celui-ci doit exister sous la forme d'un groupe acyloxy dans les composés de départ de formules II et III, et être transformé par hydrolyse en groupe hydroxyle seulement après la condensation.

18. Utilisation des dérivés du naphtolactame de formule I selon la revendication 1, comme colorants pour teindre et/ou imprimer des matières en polyacrylonitrile ou bien des matières en polyamide ou en polyester à modification acide.

19. Utilisation des dérivés du naphtolactame de formule I selon la revendication 1, où n = 0, comme colorants pour l'impression par transfert.

20. Les matières traitées avec les dérivés du naphtolactame de formule I selon la revendication 1.